# EUROPÄISCHE PATENTSCHRIFT

(11) **EP 1 476 340 B1**
(45) Veröffentlichungstag und Bekanntmachung des Hinweises auf die Patenterteilung: **22.09.2010**
(21) Anmeldenummer: 03706353.4
(22) Anmeldetag: 09.01.2003
(51) Int. Cl.: B60T 8/36

(54) **HYDRAULIKAGGREGAT FUR SCHLUPFGEREGELTE BREMSANLAGEN**
HYDRAULIC UNIT FOR AN ANTI-SLIP BRAKE SYSTEM
GROUPE HYDRAULIQUE POUR SYSTEME DE FREINAGE ANTIPATINAGE

(30) Priorität: 08.02.2002 DE 10205279; 13.08.2002 DE 10236966
(43) Veröffentlichungstag der Anmeldung: 17.11.2004
(73) Patentinhaber: Continental Teves AG & Co. oHG, 60488 Frankfurt (DE)
(72) Erfinder: HINZ, Axel, 61267 Neu-Anspach (DE); REINARTZ, Hans-Dieter, 60439 Frankfurt (DE); FISCHBACH-BORAZIO, Petra, 65936 Frankfurt (DE)
(86) Internationale Anmeldenummer: PCT/EP2003/000134
(87) Internationale Veröffentlichungsnummer: WO 2003/066403

(56) Entgegenhaltungen:
- EP-A- 0 787 084
- DE-A- 19 500 350
- DE-A- 19 643 289

## Beschreibung

Die Erfindung betrifft ein Hydraulikaggregat, insbesondere für schlupfgeregelte Bremsanlagen, nach dem Oberbegriff des Patentanspruchs 1.

Aus der EP0787084B1 ist bereits ein Hydraulikaggregat der angegebenen Art bekannt, das zur Zentralbelüftung der Aufnahmebohrungen ein Ventilationssystem mit einer koaxial zur Motoraufnahmebohrung ausgerichteten einzigen Belüftungsstelle zur Atmosphäre aufweist. Hierzu ist die Motoraufnahmebohrung als Durchgangsbohrung im Aufnahmekörper gestaltet. Die Belüftung des hinteren Abschnitts der Speicheraufnahmebohrung erfolgt durch ein komplexes Kanalsystem, bestehend aus einem Schrägkanal und Belüftungsspalte, die zwischen dem Motorflansch und dem Aufnahmekörper als auch zwischen der Motorlagerung und dem Aufnahmekörper vorgesehen sind.

Alternativ zu diesem vorgestellten Belüftungskonzept ist in einer weitern Ausführungsform der EP0787084B1 vorgeschlagen, die hintere Kammer der Speicheraufnahmebohrung direkt mit dem Hohlraum in der Haube zu verbinden, die flüssigkeitsdicht an der ersten Gehäusefläche des Aufnahmekörpers anliegt. Ein Druckausgleich erfolgt über eine in der Haube angebrachte Belüftungsstelle. Leckageflüssigkeit der Pumpe gelangt ungehindert über die Motoraufnahmebohrung in die Haube. Die Haube nimmt elektrische als auch elektronische Bauelemente auf, die nachteilig der Flüssigkeitsbenetzung ausgesetzt sind.

Daher ist es die Aufgabe der vorliegenden Erfindung, ein tauchdichtes Hydraulikaggregat der angegebenen Art derart zu verbessern, dass das Ventilationssystem vereinfacht hergestellt werden kann, wobei die vorgenannten Nachteile vermieden werden sollen.

Diese Aufgabe wird erfindungsgemäß für ein Hydraulikaggregat der eingangs genannten Gattung durch die kennzeichnenden Merkmale des Patentanspruchs 1 gelöst.

Weitere Merkmale, Vorteile und Anwendungsmöglichkeiten der Erfindung gehen im nachfolgenden aus der Beschreibung mehrerer Ausführungsbeispiele anhand von Zeichnungen hervor.

Es zeigen:
- Fig. 1: eine Draufsicht auf die erste Gehäusefläche des Hydraulikaggregats,
- Fig. 2: eine Seitenansicht des Aufnahmekörpers an der aus Fig. 1 bekannten Schnittstelle A-A,
- Fig. 3: eine weitere Seitenansicht des Aufnahmekörpers an der in der Fig. 1 gekennzeichneten Schnittstelle B-B,
- Fig. 4: einen Querschnitt durch den Aufnahmekörper in der aus Figur 1 bekannten Draufsicht im Bereich des Druckausgleichkanals,
- Fig. 5: eine alternative Ausgestaltung eines Deckels zum Verschluss zweier Speicheraufnahmebohrungen.

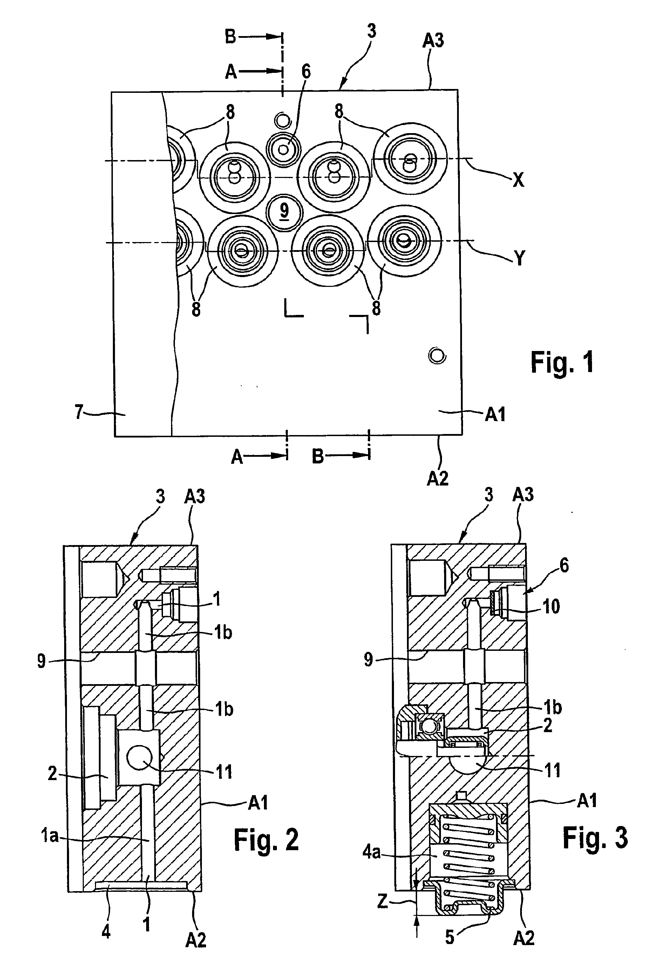

Die Figur 1 zeigt ein Hydraulikaggregat für schlupfgeregelte Bremsanlagen in einer Draufsicht auf einen blockförmigen Aufnahmekörper 3, der in mehreren Ventilaufnahmebohrungen 8 einer ersten und zweiten Ventilreihe X, Y Ein- und Auslassventile aufnimmt, die in eine erste Gehäusefläche A1 des Aufnahmekörpers 3 einmünden. Die erste Gehäusefläche A1 befindet sich rechtwinklig zwischen einer zweiten und dritten Gehäusefläche A2, A3, die insgesamt von vier Seitenflächen des Aufnahmekörpers 3 begrenzt ist, deren Kanten in Figur 1 gut zu erkennen sind. Außerdem ist im linken Bereich des Aufnahmekörpers 3 eine Haube 7 abschnittsweise skizziert, die auf der ersten Gehäusefläche A1 befestigt ist. Die Haube 7 ist an die Kontur des Aufnahmekörpers 3 angepasst und überdeckt mehrere in die Ventilaufnahmebohrungen 8 eingesetzte Ein- und Auslassventile. In der Haube 7 sind elektrischen Steuer- und/oder Regelelementen angeordneten, die mit den Ein- und Auslassventilen als auch mit einem Elektromotor verbunden sind, der an einer Gehäusefläche des Aufnahmekörpers 3 angeordnet ist, die diametral zur ersten Gehäusefläche A1 gelegen ist.

Ferner ist in Figur 1 ein zwischen den beiden Ventilreihe X, Y ein Kabelkanal 9 sowie oberhalb dazu ein in die erste Gehäusefläche A1 einmündender Druckausgleichskanal 1 zu erkennen. Durch den Kabelkanal 9 und den Druckausgleichkanal 1 verlaufen die vertikalen Schnittebenen A-A, B-B, die den für die Erfindung relevanten Bohrungsverlauf des Ventilationssystems innerhalb des Aufnahmekörper 3 nachfolgend anhand den Figuren 2, 3 verdeutlichen.

Die Figur 2 offenbart den Aufbau des Aufnahmekörpers 3 entlang der in Figur 1 gekennzeichneten Schnittebene A-A, welche durch den Kabelkanal 9, den Druckausgleichkanal 1 und durch die Motoraufnahmebohrung 2 verläuft, die quer zur Einmündungsrichtung der Pumpenaufnahmebohrung 11 in den Aufnahmekörper 3 gerichtet ist.

Die Erfindung sieht vor, dass der Druckausgleichkanal 1 von der zweiten Gehäusefläche A2 aus gesehen die Motoraufnahmebohrung 2 in Richtung der zweiten Gehäusefläche A2 durchquert, die diametral zur dritten Gehäusefläche A3 gelegen den Aufnahmekörper 3 begrenzt. Der Druckausgleichkanal 1 ist als Winkelkanal gestaltet und durch eine erste sowie eine zweite in den Aufnahmekörper 3 gerichteten Sackbohrung besonders einfach hergestellt, wozu die einen ersten und einem zweiten Druckausgleichkanalabschnitt 1a, 1b bildende zweite Sackbohrung in die zweite Gehäusefläche A2 einmündet und quer durch die Motoraufnahmebohrung 2 bis zur Belüftungsstelle 6 reicht, die ein Bestandteil der ersten Sackbohrung ist. Die erste Sackbohrung mündet in die erste Gehäusefläche A1 ein und schneidet mit ihrem Ende zur Vervollständigung des Winkelkanals das Ende der zweiten Sackbohrung. Die Belüftungsstelle 6 weist ein gasdurchlässiges, jedoch für Flüssigkeit undurchlässiges Element 10 auf, das vorzugsweise aus einer semipermeablen Membran besteht

Aus der Figur 2 geht hervor dass sich der zweite Druckausgleichkanalabschnitt 1b zwischen der Motoraufnahmebohrung 2 und der Belüftungsstelle 6 erstreckt, die unmittelbar am Ende des zweiten Druckausgleichkanalabschnitts 1b als Stufenbohrung in der ersten Gehäusefläche A1 des Aufnahmekörpers 3 einmündet. Der zweite Druckausgleichkanalabschnitt 1B durchquert den parallel zu den Ventilaufnahmebohrungen 8 gelegenen Kabelkanal 9, welcher neben der Motoraufnahmebohrung 2 angeordnet ist. Der Kabelkanal 9 verbindet den in die Motoraufnahmebohrung 2 eingesetzten Elektromotor mit den elektrischen Steuer- und/oder Regelelementen, die in der Nähe der ersten Gehäusefläche A1, vorzugsweise in der Haube 7, angeordnet sind.

Die Figur 3 zeigt einen Querschnitt durch den Aufnahmekörper 3 ausgehend von der Darstellung der Schnittebene B-B in Figur 1. Identisch zur Schnittebene A-A verläuft die Schnittebene B-B zunächst entlang dem zweiten Druckausgleichkanalabschnitt 1b bis zur Motoraufnahmebohrung 2 und schneidet danach den Querschnittsbereich des Aufnahmekörpers 3, in dem die Speicheraufnahmebohrung 4 vorgesehen ist. In der Speicheraufnahmebohrung 4 ist ein federbelasteter Kolben eingesetzt, dessen Feder sich an dem die Speicheraufnahmebohrung 4 dicht verschließenden Deckel 5 abstützt. Zwischen dem Kolben und dem Deckel 5 befindet sich die mit dem ersten Druckausgleichkanalabschnitt 1a verbundene Kammer 4a. Über die Kammer 4a erfolgt sowohl ein Druckausgleich während der Kolbenbewegung in Richtung der Belüftungsstelle 6 als auch die Aufnahme von Pumpenleckage aus der Motoraufnahmebohrung 2 über den ersten Druckausgleichkanalabschnitt (1a), wozu das Aufnahmevolumen der Kammer 4 durch die Ausgestaltung des Deckels 5 bedarfsgerecht veränderbar ist. Deshalb ist der Deckel 5 topfförmig gestaltet, der zur Vergrößerung des Leckageaufnahmevolumens an der zweiten Gehäusefläche A2 einen Überstand Z aufweist.

In der Figur 3 wird ferner das für den Antrieb der Pumpe erforderliche Wellenteil des Elektromotors gezeigt, das im Wesentlichen den in die Motoraufnahmebohrung 2 eingesetzten Exzenterantrieb aufnimmt. Der Exzenterantrieb betätigt die in die Pumpenaufnahmebohrung 11 eingesetzte Kolbenpumpe.

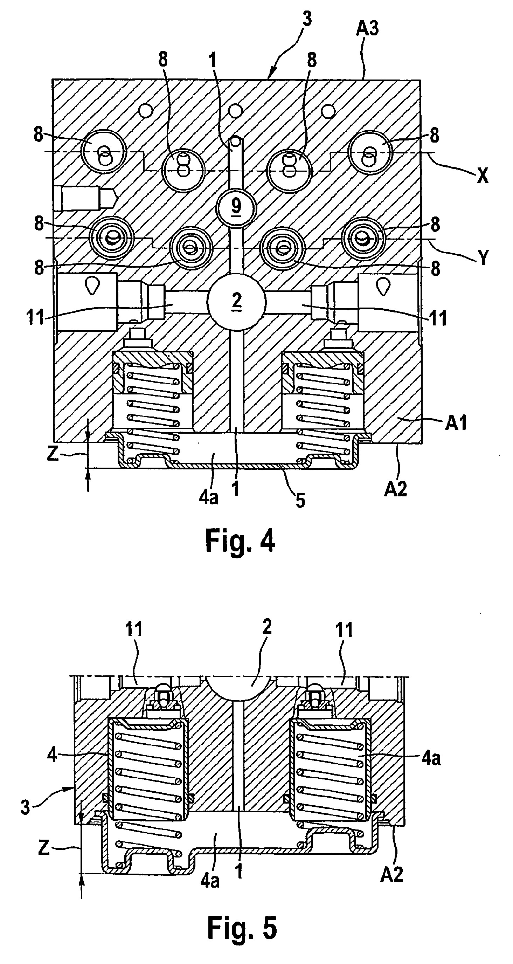

In der Figur 4 wird anstelle der aus Figur 1 bekannten Draufsicht auf die erste Gehäusefläche A1 eine Draufsicht auf eine näherungsweise entlang der halben Blockstärke des Aufnahmekörpers 3 verlaufenden Schnittfläche gezeigt, die analog zu Figur 1 die beiden Ventilreihen X, Y mit den acht Ventilaufnahmebohrungen 8 offenbart, als auch die beispielhaft unterhalb der Ventilreihen X, Y angeordnete Pumpenaufnahmebohrung 11, deren die Pumpensaugseite bildender Bohrungsabschnitt jeweils über einen die Betriebsflüssigkeit führenden Druckmittelkanal an einer Speicheraufnahmebohrung 4 angeschlossen ist, welche die Funktion eines Niederdruckspeichers übernimmt, der das von den Auslassventilen kommende Druckmittel der Pumpe zu Verfügung stellt. In die zweite Gehäusefläche A2 münden zwei parallel nebeneinander angeordnete Speicheraufnahmebohrungen 4 in einem Radialabstand zueinander ein. Innerhalb diesem Radialabstand erstreckt sich der Druckausgleichkanal 1 mittig und damit spiegelsymmetrisch durch den Aufnahmekörper 3 von der zweiten Gehäusefläche A2 bis zur Belüftungsstelle 6. Beide Speicheraufnahmebohrungen 4 werden von einem einzigen wannenförmigen Deckel 5 verschlossen.

In der Figur 5 wird in einer vergrößerten Ansicht auf Basis der Darstellung nach Figur 4 gleichfalls die Befestigung eines einteiligen Deckels 5 zum dichten Verschluss beider Speicheraufnahmebohrungen 4 gezeigt. Dieser Deckel 5 ist durch spanlose Verformung von Metall, vorzugsweise durch Tiefziehen, Kaltschlagen oder Fließpressen hergestellt. Auch die in die Speicheraufnahmebohrungen 4 eingesetzten Kolben sind auf gleiche Art hergestellt. Der Druckausgleichkanal 1 erstreckt sich bis zum Deckel 5, der im vorliegenden Beispiel unterhalb der einen Speicheraufnahmebohrung nochmals innerhalb seiner Wannenkontur eine zusätzliche Vertiefung hat, in der sich etwaige Leckage der Pumpe zunächst aufnehmen lässt. Der Deckel 5 ist an seinem abgekröpften Rand mittels einer Verstemmung des den Aufnahmekörper 3 zugrundeliegenden Gehäusematerials befestigt. Selbstverständlich sind auch weitere äquivalente kraft- als auch stoffschlüssige Befestigungsmaßnahmen möglich.

Selbstverständlich umfasst der Aufnahmekörper 3 auch mehreren die Ventil-, Pumpen- und Speicheraufnahmebohrungen verbindenden Druckmittelkanälen, die eine hydraulische Verbindung zwischen einem Druckmittelgeber und wenigstens einem Druckmittelnehmer ermöglichen. Um allerdings die Übersicht nicht zu verlieren, wurde auf eine Darstellung sämtlicher die Betriebsflüssigkeit führende Druckmittelkanäle verzichtet.

Vielmehr konzentriert sich die Beschreibung auf die wesentlichen baulichen Neuerungen zur Gestaltung eines Belüftungssystems, das die Be- und Entlüftung der Pumpen- und Speicheraufnahmebohrung 11, 4 zum Druckausgleich mit der Atmosphäre ausschließlich über eine einzige Belüftungsstelle 6 ermöglicht, wozu erfindungsgemäß die Anordnung und die konstruktive Ausführung eines Druckausgleichkanals 1 herausgestellt ist, der gleichzeitig eine Speicherung von Pumpenleckage im Bereich der Speicheraufnahmebohrung 4 ermöglicht.

Schließlich soll nicht unerwähnt bleiben, dass unter der Voraussetzung ausreichender Platzverhältnisse anstelle einer Sackbohrung der Druckausgleichkanal 1 als einzige Durchgangsbohrung hergestellt ist, so dass sich der Durchgangskanal 1 in Form einer besonders einfachen automatengerechten Bohroperation von der zweiten Gehäusefläche A2 zur dritten Gehäusefläche A3 erstreckt, welche die Belüftungsstelle 6 mit dem flüssigkeitsundurchlässigen Element 10 aufweist.

Die Erfindung hat den Vorteil, dass bei Wunsch oder Bedarf ein einziges Element 10 auch in der Haube 7 angeordnet werden kann, so dass die Belüftung der Speicheraufnahmebohrungen 4 und der Pumpen- und Motoraufnahmebohrungen 11, 2 über die in der ersten Gehäusefläche A1 angeordnete Belüftungsstelle 6 in Richtung des großvolumigen Hohlraums der Haube 7 geschieht, die über das Element 10 insbesondere dann eine Verbindung zur Atmosphäre aufweist, wenn die Haube 7 am Aufnahmekörper 3 abgedichtet ist.

### Bezugszeichenliste

- 1: Druckausgleichkanal
- 1a: Druckausgleichkanalabschnitt
- 1b: Druckausgleichkanalabschnitt
- 2: Motoraufnahmebohrung
- 3: Aufnahmekörper
- 4: Speicheraufnahmebohrung
- 4a: Kammer
- 5: Deckel
- 6: Belüftungsstelle
- 7: Haube
- 8: Ventilaufnahmebohrung
- 9: Kabelkanal
- 10: Element
- 11: Pumpenaufnahmebohrung
- X: Ventilreihe
- Y: Ventilreihe
- Z: Überstand
- A1: Gehäusefläche
- A2: Gehäusefläche
- A3: Gehäusefläche

## Patentansprüche

1. Hydraulikaggregat, insbesondere für schlupfgeregelte Bremsanlagen,
- mit einem Aufnahmekörper (3), der in mehreren Ventilaufnahmebohrungen (8) einer ersten und zweiten Ventilreihe (X,Y) Ein- und Auslassventilen aufnimmt, die in eine erste Gehäusefläche (A1) des Aufnahmekörpers (3) einmünden, die rechtwinklig zwischen einer zweiten (A2) und dritten (A3) Gehäusefläche gelegen ist,
- mit einer im Aufnahmekörper (3) angeordneten Pumpenaufnahmebohrung (11), die quer zur Einmündungsrichtung der Ventilaufnahmebohrungen (8) in den Aufnahmekörper gerichtet ist,
- mit einer im Aufnahmekörper angeordneten Motoraufnahmebohrung (2) zum Antrieb einer in die Pumpenaufnahmebohrung eingesetzten Pumpe, wozu die Motoraufnahmebohrung (2) quer zur Pumpenaufnahmebohrung (11) ausgerichtet ist,
- mit wenigstens einer in den Aufnahmekörper einmündenden Speicheraufnahmebohrung (4), die in die zweite Gehäusefläche (A2) einmündet,
- mit mehreren die Ventil-, Pumpen- und Speicheraufnahmebohrungen verbindenden Druckmittelkanälen, die eine hydraulische Verbindung zwischen einem Druckmittelgeber und wenigstens einem Druckmittelnehmer herzustellen vermögen,
- sowie mit einem Lüftungssystem (1), das die Be- und Entlüftung der Pumpen- und Speicheraufnahmebohrung (4, 11) zum Druckausgleich ausschließlich über eine einzige Belüftungsstelle (6) ermöglicht, die mit einem Druckausgleichkanal (1) des Lüftungssystems in Verbindung steht, **dadurch gekennzeichnet, dass** sich der Druckausgleichkanal (1) quer zur Motor- und Pumpenaufnahmebohrung (2, 11) von der zweiten Gehäusefläche (A2) durch die Motoraufnahmebohrung (2) in Richtung der zur zweiten Gehäusefläche (A2) diametral gelegenen dritten Gehäusefläche (A3) im Aufnahmekörper (3) erstreckt.

2. Hydraulikaggregat nach Anspruch 1, **dadurch gekennzeichnet, dass** sich ein erster Druckausgleichkanalabschnitt (1a) zwischen der Motoraufnahmebohrung (2) und einem die Speicheraufnahmebohrung (4) verschließenden Deckel (5) erstreckt, der an der zweiten Gehäusefläche (A2) vorzugsweise kraft- oder stoffschlüssig befestigt ist.

3. Hydraulikaggregat nach Anspruch 1 oder 2, **dadurch gekennzeichnet, dass** in die zweite Gehäusefläche (A2) zwei parallel nebeneinander angeordnete Speicheraufnahmebohrungen (4)in einem Radialabstand zueinander einmünden, in dem sich der erste Druckausgleichkanalabschnitt (1a) von der Motoraufnahmebohrung (2) bis zu dem die beiden Speicheraufnahmebohrungen (4) verschließenden Deckel (5) erstreckt.

4. Hydraulikaggregat nach einem der vorangegangenen Ansprüche 2 bis 3, **dadurch gekennzeichnet, dass** die Ableitung von Pumpenleckage aus der Motoraufnahmebohrung (2) zur Speicheraufnahmebohrung (4) über den ersten Druckausgleichkanalabschnitt (1a) in eine der Speicheraufnahmebohrung (4) zugeordnete Kammer (4a) erfolgt, deren Aufnahmevolumen durch die Ausgestaltung des Deckels (5) veränderbar ist.

5. Hydraulikaggregat nach Anspruch 4, **dadurch gekennzeichnet, dass** der Deckel (5) topfförmig gestaltet ist, der zur Vergrößerung des Leckageaufnahmevolumens an der zweiten Gehäusefläche (A2) einen Überstand (Z) aufweist.

6. Hydraulikaggregat nach Anspruch 2, **dadurch gekennzeichnet, dass** der Deckel (5) durch spanlose Verformung von Metall, vorzugsweise durch Tiefziehen, Kaltschlagen oder Fließpressen hergestellt ist.

7. Hydraulikaggregat nach Anspruch 2, **dadurch gekennzeichnet, dass** der Deckel (5) durch Spritzgießen von Kunststoff hergestellt ist.

8. Hydraulikaggregat nach Anspruch 1, **dadurch gekennzeichnet, dass** sich ein zweiter Druckausgleichkanalabschnitt (1b) zwischen der Motoraufnahmebohrung (2) und der Belüftungsstelle (6) erstreckt, die am Ende des zweiten Druckausgleichkanalabschnitts (1b) entweder unmittelbar im Aufnahmekörper (3) oder in einem auf die erste Gehäusefläche (A1) des Aufnahmekörpers (3) dicht aufgesetzten Haube (7) angebracht ist.

9. Hydraulikaggregat nach Anspruch 8, **dadurch gekennzeichnet, dass** die Haube (7) mehrere in die Ventilaufnahmebohrungen (8) eingesetzte Ein- und Auslassventile abdeckt, die mit in der Haube (7) angeordneten elektrischen Steuer- und/oder Regelelementen verbunden sind.

10. Hydraulikaggregat nach Anspruch 1, **dadurch gekennzeichnet, dass** der Druckausgleichkanal (1) als Winkelkanal, aus einer ersten sowie einer zweiten Sackbohrung gebildet ist, wobei die aus den beiden Druckausgleichkanalabschnitten (1a, 1b) bestehende zweite Sackbohrung in die zweite Gehäusefläche (A2) einmündet sowie quer durch die Motoraufnahmebohrung (2) bis zur Belüftungsstelle (6) geführt ist und wobei die erste Sackbohrung in die erste Gehäusefläche (A1) einmündet und mit ihrem Ende das Ende der zweiten Sackbohrung schneidet.

11. Hydraulikaggregat nach Anspruch 10, **dadurch gekennzeichnet, dass** der zweite Druckausgleichkanalabschnitt (1b) einen parallel zu den Ventilaufnahmebohrungen (8) gelegenen Kabelkanal (9) durchquert, welcher neben der Motoraufnahmebohrung () angeordnet ist und einen in die Motoraufnahmebohrung (2) eingesetzten Elektromotor mit elektrischen Steuer- und/oder Regelelementen verbindet, die neben der ersten Gehäusefläche (A1) angeordnet sind.

12. Hydraulikaggregat nach Anspruch 1, **dadurch gekennzeichnet, dass** die Belüftungsstelle (6) ein gasdurchlässiges, jedoch für Flüssigkeit undurchlässiges Element (10) aufweist, das vorzugsweise aus einer semipermeablen Membran besteht.

## Claims

1. Hydraulic assembly, in particular for slip-controlled brake systems,
- with a reception body (3) which, in a plurality of valve reception bores (8) of a first and second valve row (X, Y), receives inlet and outlet valves which issue into a first housing face (A1) of the reception body (3), the said first housing face being placed at right angles between a second (A2) and a third (A3) housing face,
- with a pump reception bore (11) which is arranged in the reception body (3) and which is directed transversely with respect to the direction of issue of the valve reception bores (8) into the reception body,
- with a motor reception bore (2), arranged in the reception body, for driving a pump inserted into the pump reception bore, for which purpose the motor reception bore (2) is oriented transversely with respect to the pump reception bore (11),
- with at least one accumulator reception bore (4) which issues into the reception body and issues into the second housing face (A2),
- with a plurality of pressure-medium ducts which connect the valve, pump and accumulator reception bores and which can make a hydraulic connection between a pressure-medium transmitter and at least one pressure-medium receiver,
- and with a ventilation system (1) which allows the aeration and deaeration of the pump and accumulator reception bores (4, 11) for pressure equalization solely via a single aeration point (6) which is connected to a pressure-equalizing duct (1) of the ventilation system, **characterized in that** the pressure-equalizing duct (1) extends transversely with respect to the motor and pump reception bores (2, 11) from the second housing face (A2) through the motor reception bore (2) in the direction of the third housing face (A3) placed diametrically to the second housing face (A2), in the reception body (3).

2. Hydraulic assembly according to Claim 1, **characterized in that** a first pressure-equalizing duct portion (1a) extends between the motor reception bore (2) and a cover (5) which closes the accumulator reception bore (4) and which is fastened preferably non-positively or in a materially integral manner to the second housing face (A2).

3. Hydraulic assembly according to Claim 1 or 2, **characterized in that** two accumulator reception bores (4) arranged parallel and next to one another issue into the second housing face (A2) at a radial distance from one another, by the first pressure-equalizing duct portion (1a) extending from the motor reception bore (2) as far as the cover (5) closing the two accumulator reception bores (4).

4. Hydraulic assembly according to one of the preceding Claims 2 and 3, **characterized in that** the diversion of pump leakage from the motor reception bore (2) to the accumulator reception bore (4) takes place via the first pressure-equalizing duct portion (1a) into a chamber (4a) which is assigned to the accumulator reception bore (4) and the reception volume of which can be varied by means of the configuration of the cover (5) .

5. Hydraulic assembly according to Claim 4, **characterized in that** the cover (5) is of pot-shaped configuration and has a projection (Z) on the second housing face (A2) in order to enlarge the leakage reception volume.

6. Hydraulic assembly according to Claim 2, **characterized in that** the cover (5) is produced by means of the non-cutting forming of metal, preferably by deep-drawing, cold-impacting or extrusion.

7. Hydraulic assembly according to Claim 2, **characterized in that** the cover (5) is produced by the injection-moulding of plastic.

8. Hydraulic assembly according to Claim 1, **characterized in that** a second pressure-equalizing duct portion (1b) extends between the motor reception bore (2) and the aeration point (6) which is mounted at the end of the second pressure-equalizing duct portion (1b) either directly in the reception body (3) or in a cowl (7) attached sealingly onto the first housing face (A1) of the reception body (3).

9. Hydraulic assembly according to Claim 8, **characterized in that** the cowl (7) covers a plurality of inlet and outlet valves which are inserted into the valve reception bores (8) and which are connected to electrical control and/or regulating elements arranged in the cowl (7).

10. Hydraulic assembly according to Claim 1, **characterized in that** the pressure-equalizing duct (1) is formed as an angle duct from a first and a second blind bore, the second blind bore which consists of the two pressure-equalizing duct portions (1a, 1b) issuing into the second housing face (A2) and being routed transversely through the motor reception bore (2) as far as the aeration point (6), and the first blind bore issuing into the first housing face (A1) and intersecting with its end at the end of the second blind bore.

11. Hydraulic assembly according to Claim 10, **characterized in that** the second pressure-equalizing duct portion (1b) crosses a cable duct (9) which is placed parallel to the valve reception bores (8) and which is arranged next to the motor reception bore (2) and connects an electric motor inserted into the motor reception bore (2) to electrical control and/or regulating elements which are arranged next to the first housing face (A1).

12. Hydraulic assembly according to Claim 1, **characterized in that** the aeration point (6) has an element (10) which is gas-permeable, but is impermeable to liquid, and which preferably consists of a semi-permeable membrane.

## Revendications

1. Groupe hydraulique, en particulier pour des systèmes de freinage antipatinage,
- avec un corps de réception (3) qui contient, dans plusieurs alésages de logement de soupapes (8) d'une première et d'une deuxième séries de soupapes (X, Y), des soupapes d'entrée et des soupapes de sortie, qui débouchent dans une première face de boîtier (A1) du corps de réception (3), qui est placée perpendiculairement entre une deuxième (A2) et une troisième (A3) faces de boîtier,
- avec un alésage de logement de pompe (11) disposé dans le corps de réception (3), qui est orienté transversalement à la direction du débouché des alésages de logement de soupapes (8) dans le corps de réception,
- avec un alésage de logement de moteur (2) disposé dans le corps de réception, pour l'entraînement d'une pompe installée dans l'alésage de logement de pompe, l'alésage de logement de moteur (2) étant à cet effet orienté transversalement à l'alésage de logement de pompe (11),
- avec au moins un alésage de logement d'accumulateur (4) débouchant dans le corps de réception, qui débouche dans la deuxième face de boîtier (A2),
- avec plusieurs canaux de fluide sous pression reliant les alésages de logement de soupapes, de pompe et d'accumulateur, qui permettent d'établir une liaison hydraulique entre un émetteur de fluide sous pression et au moins un récepteur de fluide sous pression,
- ainsi qu'avec un système d'aération (1), qui permet l'arrivée et le départ d'air dans l'alésage de logement de pompe et d'accumulateur (4, 11) pour l'équilibrage de la pression exclusivement par un seul point d'aération (6) qui est en communication avec un canal d'équilibrage de la pression (1) du système d'aération,
**caractérisé en ce que** le canal d'équilibrage de la pression (1) s'étend dans le corps de réception (3) transversalement à l'alésage de logement de moteur et de pompe (2, 11) depuis la deuxième face de boîtier (A2) à travers l'alésage de logement de moteur (2) en direction de la troisième face de boîtier (A3) opposée diamétralement à la deuxième face de boîtier (A2).

2. Groupe hydraulique selon la revendication 1, **caractérisé en ce qu'**une première partie du canal d'équilibrage de la pression (1a) s'étend entre l'alésage de logement de moteur (2) et un couvercle (5) fermant l'alésage de logement d'accumulateur (4), qui est fixé à la deuxième face de boîtier (A2), de préférence en complémentarité de force ou de matière.

3. Groupe hydraulique selon la revendication 1 ou 2, **caractérisé en ce que** deux alésages de logement d'accumulateur (4), parallèles l'un à l'autre, débouchent dans la deuxième face de boîtier (A2) à une distance radiale l'un de l'autre, dans lequel la première partie de canal d'équilibrage de la pression (1a) s'étend de l'alésage de logement de moteur (2) jusqu'au couvercle (5) fermant les deux alésages de logement d'accumulateur (4).

4. Groupe hydraulique selon l'une quelconque des revendications précédentes 2 à 3, **caractérisé en ce que** l'évacuation des fuites de la pompe de l'alésage de logement de moteur (2) vers l'alésage de logement d'accumulateur (4) est effectuée par la première partie du canal d'équilibrage de la pression (1a) dans une chambre (4a) associée à l'alésage de logement d'accumulateur (4), dont le volume de réception peut varier selon la configuration du couvercle (5).

5. Groupe hydraulique selon la revendication 4, **caractérisé en ce que** le couvercle (5) est réalisé en forme de pot, qui présente un renflement (Z) sur la deuxième face de boîtier (A2) pour augmenter le volume de réception des fuites.

6. Groupe hydraulique selon la revendication 2, **caractérisé en ce que** le couvercle (5) est fabriqué par déformation de métal sans enlèvement de copeaux, de préférence par emboutissage, frappe à froid ou filage à la presse.

7. Groupe hydraulique selon la revendication 2, **caractérisé en ce que** le couvercle (5) est fabriqué par coulée par injection de matière plastique.

8. Groupe hydraulique selon la revendication 1, **caractérisé en ce qu'**une deuxième partie du canal d'équilibrage de la pression (1b) s'étend entre l'alésage de réception de moteur (2) et le point d'aération (6), qui est placé à l'extrémité de la deuxième partie du canal d'équilibrage de la pression (1b), soit immédiatement dans le corps de réception (3) soit dans une hotte (7) posée de façon étanche sur la première face de boîtier (A1) du corps de réception (3) .

9. Groupe hydraulique selon la revendication 8, **caractérisé en ce que** la hotte (7) couvre plusieurs soupapes d'entrée et de sortie placées dans les alésages de logement de soupapes (8), qui sont reliées à des éléments électriques de commande et/ou de régulation installés dans la hotte (7).

10. Groupe hydraulique selon la revendication 1, **caractérisé en ce que** le canal d'équilibrage de la pression (1) a la forme d'un canal coudé, composé d'un premier et d'un deuxième alésages borgnes, dans lequel le deuxième alésage borgne composé des deux parties du canal d'équilibrage de la pression (1a, 1b) débouche dans la deuxième face de boîtier (A2) et est guidé transversalement à travers l'alésage de logement de moteur (2) jusqu'au point d'aération (6), et dans lequel le premier alésage borgne débouche dans la première face de boîtier (A1) et coupe par son extrémité l'extrémité du deuxième alésage borgne.

11. Groupe hydraulique selon la revendication 10, **caractérisé en ce que** la deuxième partie du canal d'équilibrage de la pression (1b) traverse un canal de câbles (9) placé parallèlement aux alésages de logement de soupapes (8), qui est disposé à côté de l'alésage de logement de moteur (2) et qui relie un moteur électrique placé dans l'alésage de logement de moteur (2) à des éléments électriques de commande et/ou de régulation, qui sont agencés à côté de la première face de boîtier (A1).

12. Groupe hydraulique selon la revendication 1, **caractérisé en ce que** le point d'aération (6) présente un élément (10) perméable au gaz, mais imperméable aux liquides, qui se compose de préférence d'une membrane semi-perméable.
